# EUROPÄISCHE PATENTANMELDUNG

(11) **EP 2 457 764 A1**
(43) Veröffentlichungstag der Anmeldung: **30.05.2012**
(21) Anmeldenummer: 10405224.6
(22) Anmeldetag: 24.11.2010
(51) Int. Cl.: B60L 5/20, B60L 5/26

(54) **Stromabnehmer für ein Schienenfahrzeug**

(71) Anmelder: Richard AG, Murgenthal, 4853 Murgenthal (CH)
(72) Erfinder: Richard, Käser, CH-4932 Lotzwil (CH); Hanspeter, Jutzi, CH-4853 Riken (CH)
(74) Vertreter: Rüfenacht, Philipp Michael

(57) **Zusammenfassung**

Ein Stromabnehmer für ein Schienenfahrzeug zur Kontaktierung einer Oberleitung umfasst eine Schere (70) mit einem Unterarm (74) und einem gelenkig daran befestigten Oberarm (71), eine am Oberarm (71) befestigte Wippe (1) mit mindestens zwei Schleifleisten (10) zur Kontaktierung des Fahrdrahts und eine regelbare Einrichtung zum Einstellen einer Anpresskraft der Wippe (1) mit den Schleifleisten (10) an den Fahrdraht. Dabei ist das Übergangsstück, welches den Oberarm (71) mit der Wippe (1) verbindet, einteilig und verformbar ausgebildet. Der Stromabnehmer umfasst zudem einen Sensor, womit eine Verformung des Übergangsstücks als Mass für die aktuelle Anpresskraft messbar ist. Die Messung dieser Anpresskraft ermöglicht eine für den optimalen Betrieb des Stromabnehmers notwendige Korrektur der Anpresskraft. Eine optimale Anpresskraft des Stromabnehmers erlaubt eine Minimierung des Verschleisses an Schleifleisten 10) und Oberleitung.

## Beschreibung

### Technisches Gebiet

Die Erfindung betrifft einen Stromabnehmer für ein Schienenfahrzeug zur Kontaktierung eines Fahrdrahts einer Oberleitung, umfassend eine Schere mit Unterarm und gelenkig daran befestigtem Oberarm, eine am Oberarm befestigte Wippe mit mindestens zwei Schleifleisten zur Kontaktierung des Fahrdrahts, sowie eine regelbare Einrichtung zum Einstellen einer Anpresskraft der Wippe mit den Schleifleisten an den Fahrdraht.

### Stand der Technik

Stromabnehmersysteme auf der Basis von Schleifkontakten sollen durch ihre Konstruktionsweise den Kontakt mit dem stromgebenden Medium (in den meisten Fällen als Oberleitungen gebaute Fahrleitungen) aufrecht erhalten und dem den Stromabnehmer tragenden Fahrzeug eine konstante Stromzufuhr ermöglichen. Da sich der relative Abstand zwischen Stromabnehmer und Fahrleitung aufgrund der Bewegung des Fahrzeuges einerseits und dem Durchhängen der Fahrleitung andererseits kontinuierlich ändert, muss die vom Stromabnehmer auf die Fahrleitung ausgeübte Anpresskraft ständig angepasst werden, um eine optimale Funktionsweise des Systems zu ermöglichen. Die Anpresskraft ist dabei typischerweise zwei verschiedenen Schwankungen unterworfen: Einer niederfrequenten Schwankung, welche durch den Mastenabstand und das damit entstehende Durchhängen der Fahrleitung entsteht, und einer hochfrequenten Schwankung, die durch aerodynamische Effekte am Stromabnehmer erzeugt wird. Besonders bei zunehmender Geschwindigkeit des Fahrzeugs nehmen die hochfrequenten Schwingungen erheblich zu, was sich negativ auf die Funktionsweise des Stromabnehmers auswirkt. Eine zu klein werdende Anpresskraft kann im Extremfall zum Abheben des Stromabnehmers von der Fahrleitung und der Bildung von Lichtbögen, welche die Fahrleitung beschädigen können, oder gar zum völligen Unterbruch des Stromflusses zwischen Fahrleitung und Stromabnehmer führen. Wird die Anpresskraft hingegen zu gross, so erhöht sich die Abnützung sowohl an der Fahrleitung als auch am Stromabnehmer und kann bleibende Deformationen an beiden Kontaktpartnern erzeugen. Eine dynamische Regelung der Anpresskraft ist also bereits ab mittleren Geschwindigkeiten sehr wichtig und für grosse Geschwindigkeiten unumgänglich.

Konstruktiv besteht ein Stromabnehmer aus zwei Teilen: Einer Wippe mit Schleifkontakten zur Abnahme des Stromes von der Fahrleitung und einer Schere. Letztere ist in den meisten Fällen entweder als Pantographenkonstruktion oder in Einholmbauweise (mit Ober- und Unterarm) ausgebildet (wie z. B. aus EP 1 120 306 B1 (Schunk Bahntechnik GmbH) bekannt). Die Pantographenkonstruktion verschwindet in zunehmendem Masse aufgrund ihres gegenüber der Einholmkonstruktion deutlich grösseren Gewichts und dem damit verbundenen trägeren Ansprechverhalten.

Aufgrund ihrer relativ grossen Masse eignet sich die Schere nur zur Kompensation der niederfrequenten, nicht aber der hochfrequenten Schwingung. Letztere wird üblicherweise durch eine die Verbindung zwischen der Schere und der Wippe bildende Konstruktion ausgeglichen. Eine solche Konstruktion (wie sie z. B. die WO 98/17495 (Daimler-Benz AG) aufweist) enthält nebst dem zur Kompensation benötigten Federmechanismus auch eine Messeinheit, mit welcher die aktuelle Anpresskraft festgestellt werden kann. Aufgrund des Vergleichs der Messung mit einem Soll-Wert kann in der Folge die Anpresskraft kontinuierlich angepasst werden.

Die Messung erfolgt gemäss bisherigem Stand der Technik üblicherweise mechanisch, und ein elektrisches Messsignal wird dem von der Fahrleitung abgenommenen Strom überlagert, mit diesem ins Fahrzeuginnere geleitet und dort wieder vom Träger entkoppelt.

Die DE 38 31 177 (Siemens AG) offenbart demgegenüber ein mehrteiliges Verbindungsstück mit einem Fixierungsstück für die Wippe und einem für die Schere sowie einer Federverbindung zwischen diesen beiden Teilen. Einer der Teile trägt die Enden eines aufgeschnittenen Lichtleiters, der andere der Teile ist mit einer Blende verbunden, welche zwischen die Enden des Lichtleiters ragt, so dass bei Unterschreitung eines vorgegebenen Schwellwertes der Belastung der Lichtweg freigegeben wird. Entsprechend kann bei der Detektion der Freigabe des Lichtwegs eine Nachregelung ausgelöst werden.

Die mehrteilige Konstruktionsweise des Übergangsstücks zwischen Wippe und Schere ermöglicht durch eine geschickte Wahl der Materialien der verschiedenen Teilstücke eine sehr gute und leicht ansprechende Federung und damit auch Messung des Anpressdrucks. Es hat sich aber gezeigt, dass durch die kontinuierliche aber sich stets ändernde Belastung des federnden Bauteils dieses sehr grossen Abnutzungskräften ausgesetzt ist und daher nach relativ kurzem Gebrauch irreparabel deformiert ist. Die Bauweise ermöglicht prinzipiell die Ersetzung dieses Bauteils, doch muss dafür das Triebfahrzeug für eine gewisse Zeit aus dem Verkehr genommen werden, was sich wirtschaftlich negativ auf die Betreibergesellschaft auswirkt. Die bekannte Konstruktion ermöglicht zudem nur eine grobe Messung und Nachregelung der Anpresskraft, indem festgestellt werden kann, ob ein Schwellwert unterschritten wird oder nicht.

### Darstellung der Erfindung

Aufgabe der Erfindung ist es, ein dem eingangs genannten technischen Gebiet zugehörendes Übergangsstück zu schaffen, welches den Abnutzungskräften standzuhalten vermag und sich im Falle einer notwendig gewordenen Ersetzung einfach und damit schnell austauschen lässt sowie eine gute Messung der Anpresskraft erlaubt.

Die Lösung der Aufgabe ist durch die Merkmale des Anspruchs 1 definiert. Gemäss der Erfindung wird das Übergangsstück einteilig und verformbar gefertigt und der Stromabnehmer umfasst einen Sensor, womit eine Verformung des Übergangsstücks als Mass für die aktuelle Anpresskraft messbar ist.

Eine einteilige Konstruktion gemäss Ausführung hat den Vorteil, dass sich die bei der kontinuierlichen Belastung auftretenden Spannungen auf das gesamte Bauteil verteilen und dadurch die Deformation des federnden Bereiches verringert wird. Zudem erlaubt eine einteilige Fertigung den raschen Ersatz von defekt gewordenen Verbindungsstücken, was im wirtschaftlichen Interesse der Betreibergesellschaft liegt.

Der Einbau eines Sensors in den Stromabnehmer ermöglicht eine kontinuierliche Messung und Überwachung der Anpresskraft, was eine stetige Anpassung dieser vom Stromabnehmer auf die Fahrleitung ausgeübten Kraft erlaubt. Dadurch wird eine Minimierung der Belastung und des damit einhergehenden Verschleisses beider Kontaktpartner erzielt was sich positiv auf die Lebensdauer dieser Bauteile auswirkt.

Die Wippe kann beidseitig mit je einem Übergangsstück mit dem Oberarm verbunden sein. Die Messung der Anpresskraft kann an einem oder an beiden Übergangsstücken erfolgen.

Bevorzugt ist der Sensor ein optischer Sensor. Die Verwendung eines optischen Sensors erlaubt eine praktisch berührungsfreie Messung der durch eine erhöhte oder erniedrigte Anpresskraft erzeugten Auslenkung der Wippe aus der Normalposition. Dadurch wird jegliche Rückkopplung des Messvorganges auf die Bewegung der Wippe eliminiert und eine optimale und präzise Messung erreicht.

Alternativ könnte die Messung auch mittels eines elektromechanischen Sensors gemacht werden, was gegenüber der vorgeschlagenen Methode nicht (im praktischen Sinne) berührungsfrei bewerkstelligt werden kann. Dies wiederum wirkt sich negativ auf die Präzision der Messung und damit die Korrektur zur Erreichung der optimalen Anpresskraft aus. Weitere mögliche Sensoren arbeiten z. B. induktiv oder kapazitiv.

Bevorzugt gibt der optische Sensor ein optisches Messsignal aus. Dies hat den Vorteil, dass das Messsignal zwischen Mess- und Ausgabeseite des Sensors nicht umgewandelt werden muss und somit keine Ungenauigkeit ins Signal eingebracht wird.

Als alternative Möglichkeit kann der optische Sensor direkt einen Umwandler enthalten, der das optische Signal in ein elektrisches transformiert. Ein solcher Umwandler erzeugt aber durch seine Arbeitsweise unweigerlich eine gewisse Ungenauigkeit, die sich negativ auf die Präzision der Messung auswirkt.

Das durch den Sensor ausgegebene optische Messsignal wird bevorzugt durch einen Lichtleiter, insbesondere einen Lichtwellenleiter, in ein Inneres des Schienenfahrzeugs zur weiteren Verarbeitung übertragen. Dies hat den Vorteil der entfallenden Umwandlung des Signals, was keine weiteren Ungenauigkeiten erzeugt und zudem einen gänzlich verlustfreien Transport des Signals erlaubt. Zudem ist die Signalübertragung mittels Lichtwellenleiter sehr störungsunempfindlich, insbesondere gegenüber elektromagnetischen _ _ - Feldern. Letztere sind bei einem strombetriebenen Triebfahrzeug gerade im Bereich des Stromabnehmers und der nachgeschalteten Elemente unweigerlich vorhanden und können schwer kontrollierbare Messfehler erzeugen.

Alternativ kann das im Sensor erzeugte Messsignal direkt in ein elektrisches umgewandelt werden und mittels einer Stromleitung zum Auswertungsort geführt werden. Bei dieser Signal-Transportmethode treten aber durch die Überlagerung von Fahrstrom und Messsignal verschiedene Probleme auf, welche die Messgenauigkeit verschlechtern und dadurch keine optimale Funktionsweise der Vorrichtung zulassen. Einerseits unterliegt die Stromzufuhr selbst gewissen Schwankungen, was die Messfehler bei der Auslesung des Messsignals erhöht und damit keine optimale Einstellung der Anpresskraft des Stromabnehmers erlaubt. Zudem kann sich diese Entkopplungsstufe im Stromleitsystem negativ auf die Stromqualität auswirken, was wiederum den optimalen Betrieb des Triebfahrzeuges verunmöglicht. Des Weiteren sind elektrische Messsignale stark den an einem strombetriebenen Schienenfahrzeug immer auftretenden elektromagnetischen Störfeldern ausgesetzt, welche eine schwer kontrollierbare Ungenauigkeit im Messsignal erzeugen.

Das Messsignal wird mittels Leitelement bevorzugt ins Innere des Schienenfahrzeuges geführt, wo die Auswertung witterungsunabhängig vorgenommen werden kann und die Auswertungseinheit nicht vor Witterungseinflüssen geschützt werden muss. Zudem ermöglicht eine Distanzierung dieser Einheit die Reduktion der durch die Fahrleitung induktiv erzeugten Fehlströme, welche die Qualität der Auswertung negativ beeinflussen können.

Als alternative Möglichkeit kann die Auswertungseinheit direkt auf dem Dach des Schienenfahrzeuges montiert werden, wo auch der Stromabnehmer angebracht ist. Dies minimiert die Länge des Leitungselements, macht aber einen Schutz der Auswertungseinheit vor Witterungseinflüssen notwendig. Einflüsse von Fehlströmen und induktiven Effekten der Fahrleitung können in dieser Montageform eine optimale Arbeitsweise der Auswertung hemmen und müssen ebenfalls reduziert oder gänzlich abgeschirmt werden.

Das Übergangsstück weist bevorzugt einen ersten Teil, mit welchem der Oberarm verbunden ist, und einen zweiten Teil, mit welchem die Wippe verbunden ist, auf und enthält einen dazwischen liegenden Bereich mit reduziertem Querschnitt, der die Verformung ermöglicht. Eine dergestalte Bauweise erlaubt einerseits die Verformung in einem eingeschränkten und klar festlegbaren Bereich, andererseits erlaubt sie die Verteilung des Biegestresses auf das gesamte Bauteil. Dadurch wird eine durch die kontinuierliche und sich stetig ändernde Belastung des reduzierten Querschnitts hervorgerufene Deformation verringert und die Lebensdauer des Bauteils erhöht.

Alternativ kann das Übergangsstück mit konstantem Querschnitt gebaut werden, was dessen Fertigung erleichtert. Ein konstanter Querschnitt verunmöglicht aber die Verformung innerhalb eines eng beschränkten Bereichs und das Bauteil verformt sich im Wesentlichen an jeder beliebigen Stelle zwischen den beiden Fixierungspunkten. Diese schlecht definierte Verformungsstelle wirkt sich negativ auf das Deformationsverhalten aus, was das Ansprechverhalten der Wippe und der gesamten Konstruktion zur Optimierung der Anpresskraft verschlechtert. Zudem erschwert eine nicht präzise definierte Verformungsstelle eine sinnvolle Platzierung des Sensors und damit eine exakte Messung der Anpresskraft.

Der optische Sensor wird gemäss einer bevorzugten Ausführung so ausgebildet und angeordnet, dass ein Abstand zwischen dem ersten und dem zweiten Teil gemessen werden kann. Damit wird in der Folge per Vergleich mit der Solldistanz direkt die notwendige Änderung der Anpresskraft berechnet. Durch diese Bauweise wird die Messdistanz klein gehalten, wodurch die äusseren Einflüsse auf die Messung minimiert werden.

In einer alternativen Bauweise wird der Sensor eingebaut um die Distanz zwischen einem Bauteil der Wippe und einem Bauteil des Oberarms zu messen. Hierdurch kann eine für die verwendete Messmethode besonders geeignete Platzierung der Sensorteile erreicht werden, was aber auf Kosten der Messpräzision passiert, welche durch eine zwangsläufig erhöhte Messstrecke und damit grössere Menge an Störeinflüssen erniedrigt wird.

Gemäss Ausführung umfasst der optische Sensor eine reflektierende Membran, welche mit einem ersten des ersten und des zweiten Teils fest verbunden ist, und einen optischen Kopf, welcher mit einem zweiten des ersten und zweiten Teils fest verbunden ist. Diese beiden Sensorteile werden in einer Weise platziert, dass durch den optischen Kopf ein Ausgangslichtstrahl auf die reflektierende Membran geworfen und ein reflektierter Lichtstrahl wieder empfangen wird, so dass basierend auf dem reflektierten Lichtstrahl der Abstand zwischen dem ersten und dem zweiten Teil bestimmbar ist.

Alternativ kann der Sensor aus einem einzigen, deformierbaren Kopf bestehen, der durch seine Verformung eine Messung des Abstands zwischen den beiden Fixierungsenden erlaubt. Solch eine Konstruktion kann aber eine deutlich geringere Messgenauigkeit besitzen, da der Weg des Lichtstrahls im Innern des Messkopfs nicht eindeutig festgelegt ist, und erfordert in der Regel eine komplexe Auswertung.

Der Weg des Licht-Messstrahls innerhalb des Sensors läuft vorteilhafterweise wie folgt: Der Ausgangslichtstrahl verlässt den Lichtleiter durch den optischen Kopf, wird an der reflektierenden Membran zurückgeworfen und durch den optischen Kopf wieder in den Lichtleiter eingekoppelt. Dieser Verlauf des Messstrahls erlaubt dessen Hin- und Rückführung zum Sensor durch ein und denselben Lichtleiter, was eine einfache und störungsunanfällige Konstruktion der Leiterbahn(en) ermöglicht. Die erwähnte, besonders vorteilhafte Verwendung eines Lichtwellenleiters bietet zudem die Möglichkeit, die beiden Lichtstrahlen überlagerungsfrei durch dasselbe Leitungselement zu führen.

Alternativ kann der Lichtstrahl durch den Sensorkopf ausgekoppelt, an der Membran reflektiert, von einem zweiten Kopf aufgenommen und mittels eines zweiten Lichtleiters zum Sensorausgang geführt werden. Dadurch kann ebenfalls eine überlagerungsfreie Übermittlung des Lichtstrahls erreicht werden, allerdings benötigt diese Ausführung zwei Lichtleiter. Die Verwendung von zwei Kopfelementen erhöht die im Sensorsystem **vor**handenen Fehlerquellen und hat eine grössere Messungsgenauigkeit zur Folge.

Die regelbare Einrichtung zum Einstellen der Anpresskraft wirkt gemäss bevorzugter Ausführung zwischen einem Grundgestell des Stromabnehmers und dem Unterarm der Schere. Diese Bauweise hat eine der Änderung der Anpresskraft folgende Anhebung und Senkung des gesamten Stromabnehmer-Aufbaus zur Folge, ermöglicht aber eine robuste und störungsunanfällige Konstruktion. Gerade letzteres ist von grosser Wichtigkeit, denn eine präzise Feststellung der notwendigen Korrektur ist ohne eine verlässliche und präzise arbeitende Einrichtung zur Ausführung dieser Anpassung sinnlos.

In einer alternativen Konstruktion wird diese Einrichtung an der Wippe, zwischen deren Fixierung am Oberarm und den Schleifleisten, angebracht. Dieser Befestigungsort bedingt aber eine entsprechend leichte Bauweise, die wiederum störungsanfällig ist und nicht in jedem Fall einen problemlosen Betrieb garantieren kann.

Zur Verhinderung eines Einhakens der Schleifleisten an der Fahrleitung bei deren seitlicher Verschiebung über die Schleifleisten hinaus werden typischerweise sogenannte Auflaufhörner angebracht, die deutlich über die Enden der Schleifleisten hinausragen. Gemäss der beschriebenen Bauweise werden sie bevorzugt direkt am Übergangsstück befestigt. Dies hat eine Messung der Anpresskraft auch dann zur Folge, wenn die Fahrleitung einseitig über die Schleifleisten hinaus verschoben ist. In diesem Fall kann die Situation durch den Vergleich der beiden Messwerte - auf beiden Seiten der Wippe - erkannt und durch Einleiten der notwendigen Bewegung des Stromabnehmers der Sollzustand der Fahrleitung gegenüber der Wippe wiederhergestellt werden.

Alternativ können die Auflaufhörner am Oberarm der Schere befestigt werden, wodurch sie aber nicht mit der Messeinheit verbunden sind und ein seitliches Entgleiten der Fahrleitung möglicherweise nicht mehr rechtzeitig festgestellt werden kann, um eine Gegenkorrektur durch den Stromabnehmer einzuleiten.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: die Wippe inkl. Übergangsstück und montierten Auflaufhörnern;
- Fig. 2: das Übergangsstück mit Winkeleisen zur Befestigung der Wippe sowie dem angebrachten Lichtleiter;
- Fig. 3: das Übergangsstück ohne Winkeleisen;
- Fig. 4: eine schematische Querschnittsdarstellung des Übergangsstücks;
- Fig. 5: eine Gesamtansicht des Stromabnehmers; und
- Fig. 6: eine schematische Darstellung des Sensors.

Grundsätzlich sind in den Figuren gleiche Teile mit gleichen Bezugszeichen versehen.

### Wege zur Ausführung der Erfindung

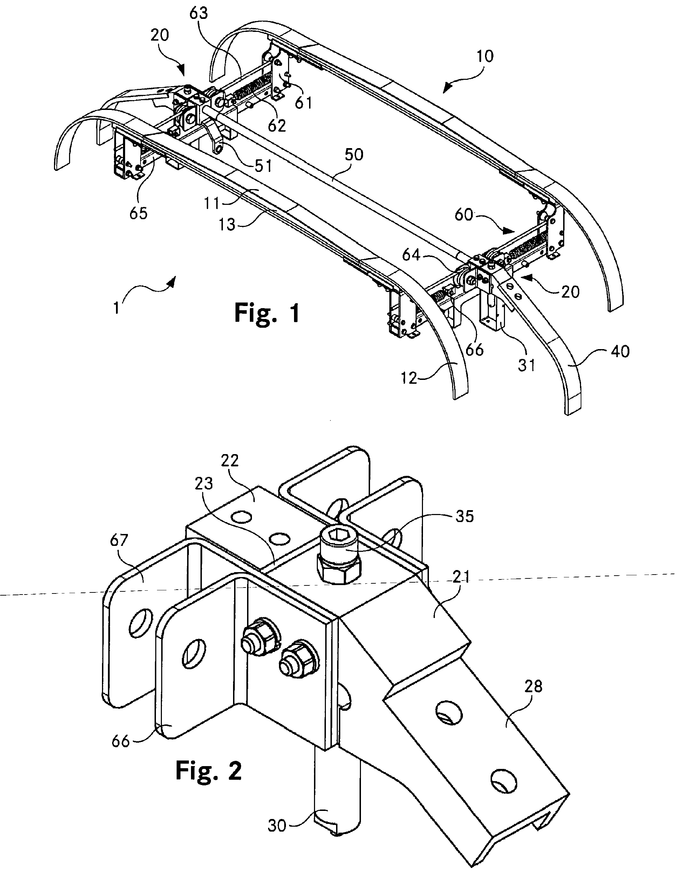

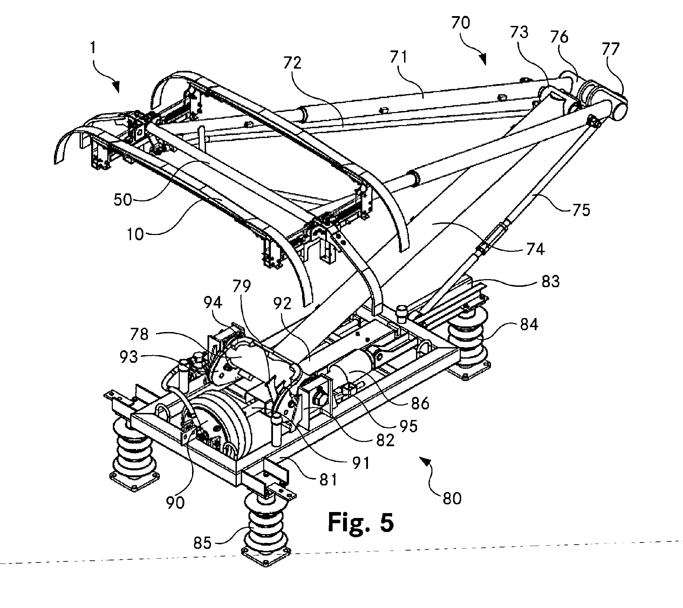

Die Figur 1 stellt eine Wippe 1 eines Stromabnehmers dar, bestehend aus zwei parallel und horizontal angeordneten Schleifleisten 10, die beide durch jeweils eine Tragkonstruktion 60 an einem dazwischen liegenden Übergangsstück 20 befestigt sind. Die beiden Übergangsstücke 20 wiederum sind durch eine parallel zu und zwischen den beiden Schleifleisten angebrachte Verbindungsstange 50, an welcher ein Oberarm der Schere 70 fixiert ist (siehe Fig. 5), miteinander verbunden. An den beiden Enden einer horizontalen, quer zu den Schleifleisten 10 und zur Verbindungsstange 50 orientierten Leiste 65 sind jeweils zwei parallel und vertikal angeordnete Platten 61 angebracht, die einerseits die Schleifleisten 10 tragen und andererseits der Fixierung eines Federmechanismus dienen. Dieser Federmechanismus wird aus einer zwischen den beiden Platten 61 und dem Federlager 66 befestigten Spiralfeder 62 sowie einer Schenkelfeder 63, welche oberhalb der Spiralfeder fixiert ist, gebildet. Letztere ist mit einem Schenkel über eine am Übergangsstück 20 angebrachte Umlenkrolle 64 gelegt und drückt mit einem anderen Schenkel von unten auf eine zwischen den beiden Platten 61 befestigte Rolle, wodurch die Schleifleisten 10 insgesamt sowohl horizontal wie auch vertikal federnd gelagert sind. Mittels zweier Winkeleisen 66, 67 ist die Umlenkrolle 64 am Übergangsstück 20 angebracht und erlaubt dadurch eine durch den Federmechanismus gebildete Verbindung der Tragkonstruktion 60 mit dem Übergangsstück 20.

Die Schleifleisten 10 bestehen aus einer horizontal, an den auf derselben Seite der Verbindungsstange 50 liegenden Platten 61 der beiden Tragkonstruktionen 60 befestigten Leiste 13 sowie dem darauf angebrachten Schleifkontakt 11. An den beiden Übergangsstücken 20 ist des Weiteren jeweils ein rechtwinklig zu den beiden Tragkonstruktionen 60 fixiertes Auflaufhorn 40 befestigt, das seitlich aus der Wippenkonstruktion hinausragt und ein laterales Abgleiten der Fahrleitung über die Schleifleisten hinaus verhindert. Die Enden der Leiste 13 sind als Halbkreise 12 so nach unten gebogen, dass sie näher an der Wippe liegen als die Auflaufhörner 40.

Die horizontale Stellung der Wippe 1 wird durch eine weitere Stange der Schere 70 sichergestellt, die am von unten am Übergangsstück 20 fixierten und von der Verbindungsstange 50 weggebogenen Winkeleisen 51 befestigt ist (siehe Fig. 5). Über die Wegführvorrichtung 31 wird ein Lichtleiter von einem Sensor im Übergangsstück 20 weggeführt. Die Figur 2 zeigt das Übergangsstück 20 mit am Wippen-Fixierungsende 21 durch zwei horizontal verlaufende Schrauben gemeinsam angebrachten Winkeleisen 66, 67 zur Befestigung der Tragkonstruktion 60 der Wippe 1. Das Übergangsstück 20 umfasst einen quaderförmigen Hauptteil und eine ungefähr mittig am Wippen-Fixierungsende 21 angebrachte, zungenförmige, nach unten abgewinkelte Verlängerung 28 mit nach unten offenem, U-förmigem Querschnitt zur Befestigung der Auflaufhörner 40. Des Weiteren ist das Wippen-Fixierungsende 21 parallel zur Verlängerung 28 angeschrägt, wodurch die Auflaufhörner 40 passgenau fixiert werden können und nahtlos an das Übergangsstück 20 anschliessen. Die in diesem Ausführungsbeispiel dargestellte Platzierung des Lichtleiters 30, dessen Ende oben über das Übergangsstück 20 hinausragt und durch eine Schraube 35 abgeschlossen ist, ermöglicht eine nach unten zum Triebfahrzeug hin gerichtete, für den Betrieb störungsfreie Wegführung der Leiterbahn.

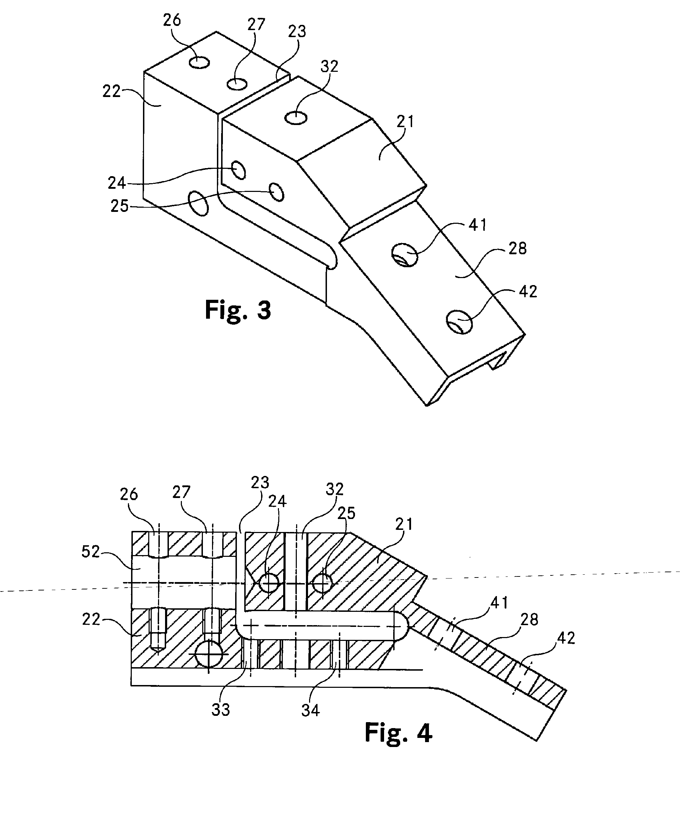

Die Figur 3 zeigt das Übergangsstück 20 ohne Winkeleisen 66, 67 in Schrägansicht, wobei die beiden Fixierungsenden 21, 22 für die Tragkonstruktion 60 und die Verbindungsstange 50 durch den senkrecht von oben her und unterhalb der Bauteilmitte horizontal in Richtung der zungenförmigen Verlängerung 28 geführten, L-förmigen Schlitz 23 distanziert sind. Dieser Schlitz 23 ist in seinem vertikalen Bereich deutlich dünner als die Bauteildimensionen; in seinem horizontalen Bereich besitzt er eine gewisse Breite, welche die Federung der beiden Fixierungsenden 21, 22 gegeneinander sowie die Aufnahme des Sensors erlaubt. Die Verformung wird durch den bei der zungenförmigen Verlängerung 28 entstandenen, reduzierten Querschnitt zwischen den beiden Fixierungsenden 21, 22 ermöglicht.

Die Tragkonstruktion 60 wird am Wippen-Fixierungsende 21 mittels zweier Schrauben durch die horizontalen Bohrungen 24, 25 angebracht. Zwischen diesen beiden Bohrungen 24, 25 verläuft vertikal eine Bohrung 32 zur Aufnahme des Lichtleiters 30 und den Sensor. Zur Befestigung der Verbindungsstange 50 weist das Fixierungsende 22 ebenfalls zwei Bohrungen 26, 27 auf, die vertikal geführt sind. Das Auflaufhorn 40 wird mittels zweier Schrauben an der dafür vorgesehenen, zungenförmigen Verlängerung 28 durch die Bohrungen 41, 42 fixiert und bildet in dieser Position die direkte Verlängerung der am Fixierungsende 21 angebrachten Anschrägung.

Die Figur 4 stellt einen Querschnitt durch eine bevorzugte Ausführungsform des Übergangsstücks 20 dar, der wie Fig. 3 die Anordnung und Lage der diversen Bohrungen sowie der Anschrägung am Fixierungsende 21 detailliert aufzeigt. Das Übergangsstück 20 erhält seine Federmöglichkeit durch die vertikal und danach horizontal in der Bauteilmitte, in Richtung der zungenförmigen Verlängerung 28, in L-Form geführte Aussparung 23 beziehungsweise durch die zur Verlängerung 28 hin verbleibende, dünne Wandstärke zwischen den beiden Fixierungsenden 21, 22. Dabei wird diese Aussparung 23 von oben her mit kleinem Querschnitt in das Übergangsstück hineingeführt und besitzt erst im horizontalen Bereich eine gewisse Höhe, welche die Federung der beiden Fixierungsenden 21, 22 gegeneinander sowie die Aufnahme des Sensors erlaubt.

Die Anschrägung am Fixierungsende 21 ist parallel zur Verlängerung 28 angebracht, sodass das fixierte Auflaufhorn 40 die passgenaue Verlängerung der Anschrägfläche bildet. Die Verbindungsstange 50 wird von der Bohrung 52 aufgenommen und mittels zweier Schrauben durch die vertikalen Bohrungen 26, 27 fixiert, wogegen die Winkeleisen 66, 67 zur Lagerung der Tragkonstruktion 60 der Wippe in den horizontalen Bohrungen 24, 25 festgeschraubt werden. Der Lichtleiter 30, dessen Wegführvorrichtung 31 mittels Schrauben in den vertikalen Bohrungen 33, 34 fixiert wird, wird durch die vertikale Bohrung 32 ins Innere des Übergangsstücks zum horizontalen Bereich der Aussparung 23 geführt.

Die Figur 5 stellt eine Gesamtansicht des Stromabnehmers dar, die aufzeigt, wie die Wippe 1 an der Schere 70 und diese wiederum am Grundgestell 80 fixiert ist. Die Wippe 1 wird durch die Verbindungsstange 50 getragen, die an den beiden Oberarmen 71 der Schere 70 fixiert ist, sodass sie mit einer Querstange 76 ein Trapez bildet. Das Lager 73 der beiden Oberarme 71 befindet sich etwas zur Wippe hin verschoben zwischen den beiden Oberarmen 71, sodass durch die Befestigung einer Kuppelstange 75 an einer an der Querstange 76 angebrachten, von der Wippe 1 weggerichteten Verlängerung 77 sowie der Wippenführung 72 die Wippe beim Anheben und Senken nicht aus ihrer Position ausgelenkt wird.

Diese Wippenführung 72 ist an ihrem oberen Ende am Winkeleisen 51 der Wippe 1 und am unteren Ende direkt unterhalb des Lagers 73 am Unterarm 74 fixiert, sodass sie zusammen mit dem Oberarm 71, dem Winkeleisen 51 und dem Abschnitt des Unterarms zwischen Lager 73 und Fixierungspunkt der Wippenführung 72 ein Gelenkviereck bildet. Das Lager 73 wird vom Unterarm 74 getragen, der seinerseits durch das Lager 78 am Grundgestell 80 in einem Sektorbereich drehbar gelagert ist. Die Kuppelstange 75 ist an ihrem oberen Ende an der Verlängerung 77 der Querstange 76 angebracht und an ihrem unteren Ende zwischen den beiden fingerförmigen, in der Ebene des Grundgestells 80 und unterhalb des Unterarms 74 befestigten Verlängerungsschienen 83 des Grundgestells 80 drehbar fixiert.

Aufgebaut ist das Grundgestell 80 aus einem Grundrahmen 81, auf dessen Längsseiten jeweils eine nach oben gerichtete Halterung 82 für die Achse des unteren Lagers 78 des Unterarms 74 angebracht ist, sowie den erwähnten, an der Aussenseite des Rahmens 81 angebrachten Verlängerungsschienen 83. Am Ende dieser beiden Verlängerungsschienen 83 ist auf der der Schere 70 abgewandten Seite ein Isolator 84 zur Befestigung des Stromabnehmers auf dem Fahrzeugdach angebracht; zwei weitere Isolatoren 85 sind am anderen Ende des Grundgestells 80, auf beiden Aussenseiten des Grundrahmens 81 und in dieselbe Richtung wie der erste Isolator 84 weisend befestigt.

Ein Anheben der Wippe 1 wird wie folgt bewerkstelligt: Durch die Expansion eines Balgzylinders 90, wird die benötigte Kraft via eine Verbindungsstange 91, die im Innern einer U-förmigen, nach unten geöffneten Führungsschiene 92 gelagert ist, auf eine über eine horizontal unterhalb dieser Führungsschiene angebrachte Querleiste auf ein Drahtseil 95 übertragen. Dieses Drahtseil 95 beschreibt einen Halbkreis, der an beiden Enden an der ebengenannten Querleiste fixiert ist und dessen Bogenstück über am Lager 78 angebrachte, ovale Platten 93 sowie zwei viertelkreisförmige, ebenfalls auf dem Lager 78 befestigte Führungsschienen 94 geführt ist. Durch die somit erzeugte Bewegung des Lagers 78 wird der daran befestigte Unterarm 74 aufgerichtet. Die Kuppelstange 75 sorgt dabei für ein gleichmässiges Aufrichten der Oberarme 71, welche die Wippe 1 anheben. Letztere wiederum behält durch die Fixierung mittels Wippenführung 72 ihre Ausrichtung bei. Im Falle einer Absenkung der Wippe 1 mittels Kontraktion des Balgzylinders 90 sorgt ein Dämpfer 86, der durch zwei Rippen 79 exzentrisch mit dem Lager 78 des Unterarms 74 verbunden ist, für eine gebremste Bewegung.

Die Anpassung der Anpresskraft der Wippe 1 wird durch denselben Balgzylinder 90 erreicht, der auch die Aufrichtung und Absenkung der Wippe 1 bewerkstelligt.

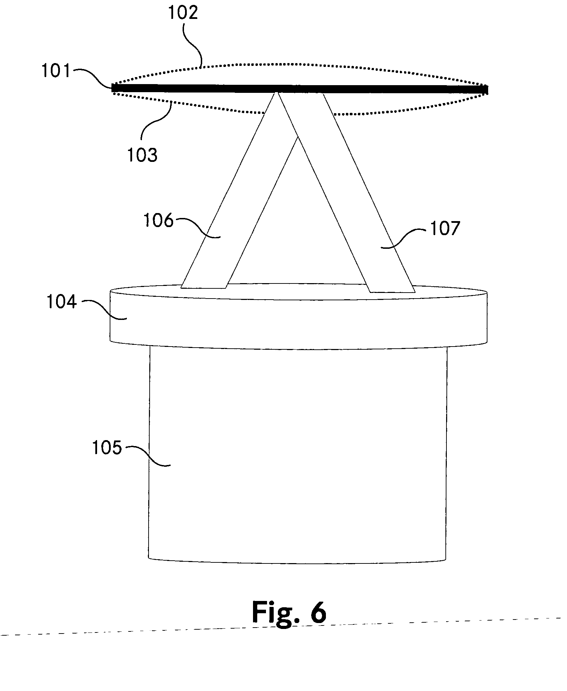

Die Figur 6 stellt den schematischen Aufbau des optischen Sensors dar, welcher aus einer reflektierenden Membran 101 und einem Kopf 105 besteht. Ein optisches Messsignal (insbesondere in Form eines kohärenten Lichtstrahls) wird via einen Lichtleiter 105 zum Kopf 104 geführt, wo der Lichtstrahl entkoppelt und in Richtung der Membran 101 emittiert wird. Der emittierte Lichtstrahl 106 trifft auf die Membran 101, welche durch eine auf den Sensor einwirkende Kraft aus ihrer Ruhelage 101 vom Kopf 104 weg (Position 102) oder zum Kopf 104 hin (Position 103) ausgelenkt sein kann, und wird an dieser reflektiert. Der reflektierte Lichtstrahl 107 wird vom Kopf 104 aufgenommen und in den Lichtleiter 105 eingekoppelt.

Indem der Kopf mit einem der Fixierungsenden 21, 22 und die Membran am anderen der Fixierungsenden 21, 22 angeordnet ist, ergibt sich in Abhängigkeit der Anpresskraft eine Änderung des Abstands des Kopfs 105 und der Membran 101. Basierend auf dem eingekoppelten reflektierten Lichtstrahl 107 kann der Abstand zwischen dem Kopf 105 und der Membran 101 präzise gemessen werden, z. B. indem in an sich bekannter Weise der ursprüngliche Lichtstrahl und der reflektierte Lichtstrahl 107 miteinander überlagert und die entstehenden Interferenzen ausgewertet werden.

Obwohl die Einholmbauweise in zunehmendem Masse die handelsübliche Konstruktion der Schere darstellt, könnte letztere z. B. auch als Pantograph ausgebildet sein.

Details der Geometrie des Übergangsstücks können im Rahmen der Erfindung ebenfalls abgewandelt werden, so z. B. die Form und Anordnung der Aussparung 23 oder der zungenförmigen Verlängerung 28.

Der Grundrahmen 81 kann durch eine beliebig grössere Anzahl von Isolatoren auf dem Dach des Schienenfahrzeugs befestigt sein.

Zusammenfassend ist festzustellen, dass durch die Erfindung ein Übergangsstück geschaffen wird, welches den Abnutzungskräften standzuhalten vermag und bei einer notwendig gewordenen Ersetzung schnell und einfach ausgetauscht werden kann sowie eine gute Messung der Anpresskraft erlaubt.

## Patentansprüche

1. Stromabnehmer für ein Schienenfahrzeug zur Kontaktierung eines Fahrdrahts einer Oberleitung, umfassend
a) eine Schere (70) mit Unterarm (74) und gelenkig daran befestigtem Oberarm (71);
b) eine am Oberarm (71) befestigte Wippe (1) mit mindestens zwei Schleifleisten (10) zur Kontaktierung des Fahrdrahts;
c) eine regelbare Einrichtung zum Einstellen einer Anpresskraft der Wippe (1) mit den Schleifleisten (10) an den Fahrdraht;
**dadurch gekennzeichnet, dass**
d) ein Übergangsstück (20), welches den Oberarm (71) mit der Wippe (1) verbindet, einteilig und verformbar ausgebildet ist und
e) dass der Stromabnehmer einen Sensor umfasst, womit eine Verformung des Übergangsstücks (20) als Mass für die aktuelle Anpresskraft messbar ist.

2. Stromabnehmer nach Anspruch 1, **dadurch gekennzeichnet, dass** der Sensor ein optischer Sensor ist.

3. Stromabnehmer nach Anspruch 2, **dadurch gekennzeichnet, dass** der Sensor ein optisches Messsignal ausgibt.

4. Stromabnehmer nach Anspruch 3, **dadurch gekennzeichnet, dass** das optische Messsignal durch einen Lichtleiter (105), insbesondere einen Lichtwellenleiter, in ein Inneres des Schienenfahrzeugs zur weiteren Verarbeitung übertragen wird.

5. Stromabnehmer nach einem der Ansprüche 1 bis 3, **dadurch gekennzeichnet, dass** das Übergangsstück (20) einen ersten Teil aufweist, mit welchem der Oberarm (71) verbunden ist, und einen zweiten Teil, mit welchem die Wippe (1) verbunden ist, wobei zwischen dem ersten Teil und dem zweiten Teil ein Querschnitt des Übergangsstücks (20) reduziert ist, um die Verformung zu ermöglichen.

6. Stromabnehmer nach den Ansprüchen 2 und 5, **dadurch gekennzeichnet, dass** der optische Sensor ausgebildet und angeordnet ist, um einen Abstand zwischen dem ersten Teil und dem zweiten Teil zu messen.

7. Stromabnehmer nach Anspruch 6, **dadurch gekennzeichnet, dass** der Sensor eine reflektierende Membran (101) umfasst, welche mit einem ersten des ersten und des zweiten Teils fest verbunden ist und einen optischen Kopf (104), welcher mit einem zweiten des ersten und zweiten Teils fest verbunden ist, wobei durch den optischen Kopf (104) ein Ausgangslichtstrahl (106) auf die reflektierende Membran (101) geworfen und ein reflektierter Lichtstrahl (107) wieder empfangen wird und wobei basierend auf dem reflektierten Lichtstrahl (107) der Abstand zwischen dem ersten und dem zweiten Teil bestimmbar ist.

8. Stromabnehmer nach Anspruch 7, **dadurch gekennzeichnet, dass** durch den optischen Kopf (104) der Ausgangslichtstrahl (106) aus dem Lichtleiter (105) ausgekoppelt und der reflektierte Lichtstrahl (107) wieder in den Lichtleiter eingekoppelt wird.

9. Stromabnehmer nach einem der Ansprüche 1 bis 8, **dadurch gekennzeichnet, dass** die regelbare Einrichtung zum Einstellen der Anpresskraft zwischen einem Grundgestell (80) des Stromabnehmers und dem Unterarm (74) der Schere wirkt.

10. Stromabnehmer nach einem der Ansprüche 1 bis 9, **dadurch gekennzeichnet, dass** ein Auflaufhorn (40) direkt am Übergangsstück (20) befestigt ist.
